# EUROPEAN PATENT SPECIFICATION

(11) **EP 0 431 914 B1**
(45) Date of publication and mention of the grant of the patent: **05.06.1996**
(21) Application number: 90313190.2
(22) Date of filing: 05.12.1990
(51) Int. Cl.: G11B 23/087, G11B 15/61

(54) **Magnetic tape cassettes**
Magnetbandkassetten
Cassettes à bande magnétique

(30) Priority: 06.12.1989 JP 317026/89
(43) Date of publication of application: 12.06.1991
(73) Proprietor: SONY CORPORATION, Tokyo 141 (JP)
(72) Inventor: Tanaka, Masato, c/o Patents Div., Sony Corp., Tokyo 141 (JP); Yanaka, Kiyotaka, c/o Patents Div., Sony Corp., Tokyo 141 (JP)
(74) Representative: Cotter, Ivan John

(56) References cited:
- FR-A- 2 508 223
- GB-A- 2 044 733
- GB-A- 2 114 952
- GB-A- 2 131 769
- GB-A- 2 167 386
- US-A- 4 163 533

## Description

This invention relates to magnetic tape cassettes.

Various magnetic tape cassettes for accommodating therein a magnetic tape on which a signal such as a video signal, a pulse code modulated (PCM) signal or the like is recorded at high density, are now available on the market. Each of these tape cassettes incorporates therein a braking member to lock the reel hubs so that the reel hubs are inhibited from being rotated, so as to prevent the magnetic tape from slackening when the tape cassette is not in use. Such tape cassettes might be, for example, 1/2-inch video tape cassettes or 8 mm video tape cassettes.

More specifically, when such a tape cassette is not in use, the braking member is spring-biased by a spring in the direction in which it is urged against a reel hub, thereby locking the reel hub so that the reel hub cannot be rotated. When the tape cassette is in use, the braking member is moved away from the reel hub by a lock releasing pin inserted from outside the cassette casing. Thus, the locking of the reel hub is released.

Some tape cassettes having such a braking member are of the type for so-called one side use, so that only one side of the magnetic tape can be recorded and reproduced (the tape cassette cannot be turned over in use). For this reason, the braking member performs the lock releasing operation only from one side of the cassette casing. That is, when the tape cassette is loaded onto a cassette tape recorder, a lock releasing pin is inserted into the tape cassette from its lower side, and the hub lock releasing operation of the braking member is performed by this lock releasing pin.

A double-sided tape cassette in which a PCM signal is recorded on a magnetic tape at high recording density has however been developed recently, in which two sides of the magnetic tape can be recorded and reproduced. In that case, since the cassette casing is turned over to use the two sides of the magnetic tape, the hub lock releasing operation cannot be achieved with the known braking member, which performs the hub lock releasing operation only from the one side of the cassette casing.

Patent Specification GB-A-2 044 733, on which the classifying portion of claim 1 is based, discloses a tape cassette which incorporates a reel locking assembly comprising a T-shaped slidable portion with ratchet members pivotable on the ends of the bar of the T and springs engaged with the slidable portion and with the ratchet members to bias the assembly for engagements with ratchet teeth on reel hubs, the free end of the stem of the T having on each side an angled actuating surface for cooperation with an actuating pin to move the assembly against the bias of the springs upon insertion of the tape cassette into a cassette player.

Patent Specification GB-A-2 131 769 discloses a tape cassette having a reel locking assembly comprising a mount having a double faced cam thereon to cooperate with an actuating pin, a pair of pawls in the form of spring blades secured to the mount and to engage the reels of the cassette and a bifurcated leaf spring to bias the assembly away from a wall of the cassette towards the reel hubs, the mount being guided in guides projecting from housing portions of the cassette and the guides including portions to guide both movement of the mount therein and movement of pawls with respect thereto.

According to the present invention there is provided a magnetic tape cassette comprising:
a braking means provided within a cassette casing in such a manner that portions of the braking means can be brought into contact with or be separated from peripheral surfaces of a pair of reel hubs around which a magnetic tape is wound;
wherein the braking means is always spring-biased in the locking direction in which it is urged against the reel hubs; and has symmetrically-inclined cam surfaces on its upper and lower sides which are pushable by a pin inserted from either of insertion apertures formed through upper and lower parts of the cassette casing to effect a hub lock releasing operation of the braking means;
characterised in that the braking means comprises a single integral braking member formed with an upstanding portion having the cam surfaces thereon to cooperate with the pin; a flat plate portion received in a recess in a wall of the cassette casing; nail members protruding from the front of the flat plate portion to engage the reel hubs; and a pair of left and right resilient protruded portions protruding from the rear of the flat plate portion so that, when the braking means is moved abnormally in the hub lock releasing operation, one of the pair of resilient protruded portions is brought into contact with a portion of the cassette casing to cause the braking member to be returned to a normal hub lock releasing position.

The invention will now be described by way of example with reference to the accompanying drawings, throughout which like parts are referred to by like references, and in which:
Figure 1 is a perspective view of a braking mechanism portion of a magnetic tape cassette to which the present invention is applied;
Figure 2 is a plan view of the braking mechanism portion in the hub lock released condition;
Figures 3A and 3B are longitudinal cross-sectional side views for explaining the operation of the braking mechanism portion;
Figure 4 is a perspective view of an embodiment of magnetic tape cassette according to the present invention;
Figure 5 is a perspective view illustrating a relationship between the magnetic tape cassette and a head drum; and
Figure 6 is a plan view illustrating the magnetic tape cassette of the present invention from the lower half side.

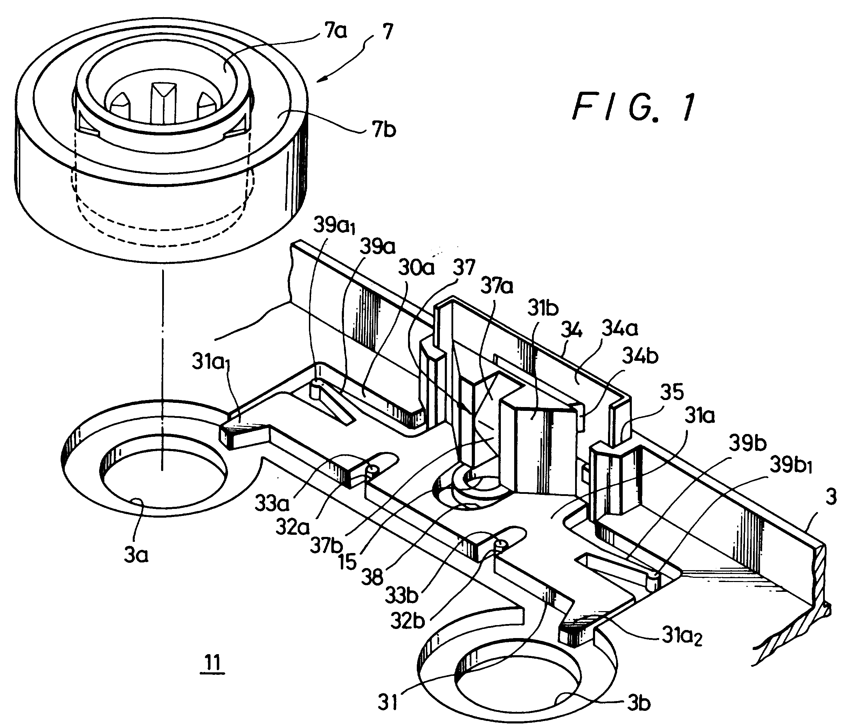

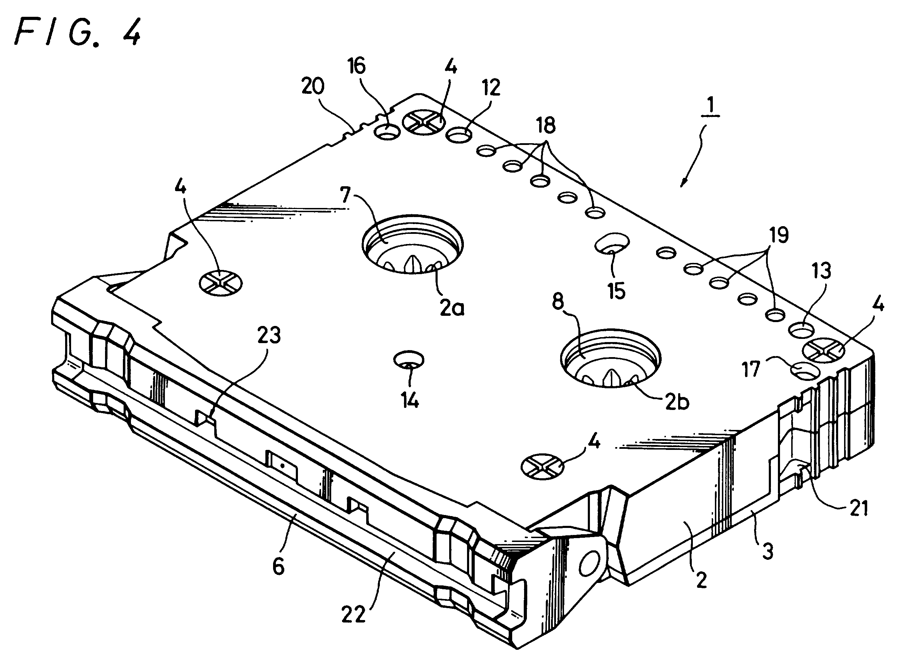

An embodiment of magnetic tape cassette according to the present invention will now be described with reference to Figures 1 to 6. The tape cassette to be described is an extremely small magnetic tape cassette.

The tape cassette comprises a cassette casing 1 which accommodates therein a magnetic tape T on and from which, for example, a PCM signal is recorded and reproduced. The cassette casing 1 is formed by fastening an upper half or upper part 2 and a lower half or lower part 3 by screws 4, and a lid 6 is rotatably supported on the cassette casing so as to open and close an opening 5 formed on the front surface sides of both the upper and lower parts 2 and 3.

The tape T accommodated within the cassette casing 1 is wound around a pair of reel hubs 7 and 8 provided in correspondence with hub drive shaft insertion apertures 2a, 2b and 3a, 3b. One portion of the tape T is exposed at the opening 5 and extends between pinch rollers 9 and 10 serving as guide rollers and pivotally supported on both sides of the opening 5.

A braking mechanism 11 is provided within the cassette casing 1 to brake the two reel hubs 7 and 8 when the tape cassette is not in use. Mis-erase preventing mechanisms 12 and 13 are provided at the upper and lower surface sides of the cassette casing 1 at its two rear corner portions so as to communicate with the upper and lower parts 2 and 3. Positioning reference apertures 14, 15 and 16, 17 are formed through the cassette casing 1 at its central front and back portions in the front to back direction and at its two rear side portions in the lateral direction. A plurality of predetermined detection apertures 18 and 19 are formed through the cassette casing 1 at its rear edge portion in the lateral direction. Grip portions 20 and 21 are formed on the rear portions of the two side walls of the cassette casing 1.

An engaging portion 23 for a cassette changer is formed along a guide groove 22 extending along the width direction of the lid 6 which opens and closes the opening 5 of the cassette casing 1.

In the tape cassette thus arranged, the tape T is recorded and/or reproduced by a rotary head in a helical scan fashion.

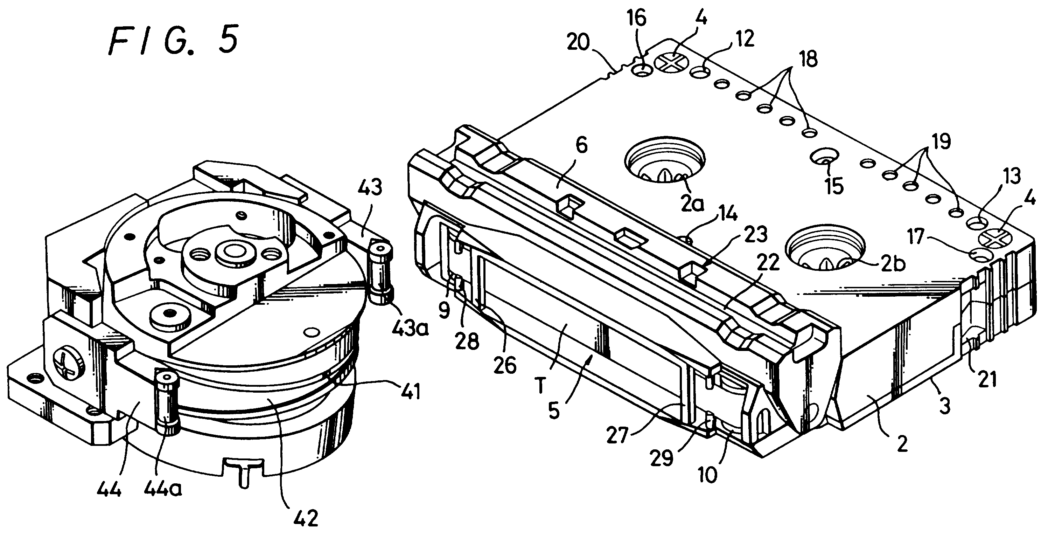

More specifically, as shown in Figure 5, a rotary head 41 is rotated at a predetermined slant angle relative to a head drum 42, and the head drum 42 is partly inserted into the opening 5, which is opened by rotating the lid 6 of the cassette casing 1 in the upper or lower direction. The tape T extending across the opening 5 is wound around the insertion side peripheral surface of the head drum 42. Thus, when the rotary head 41 is rotated, oblique tracks are formed across the tape T.

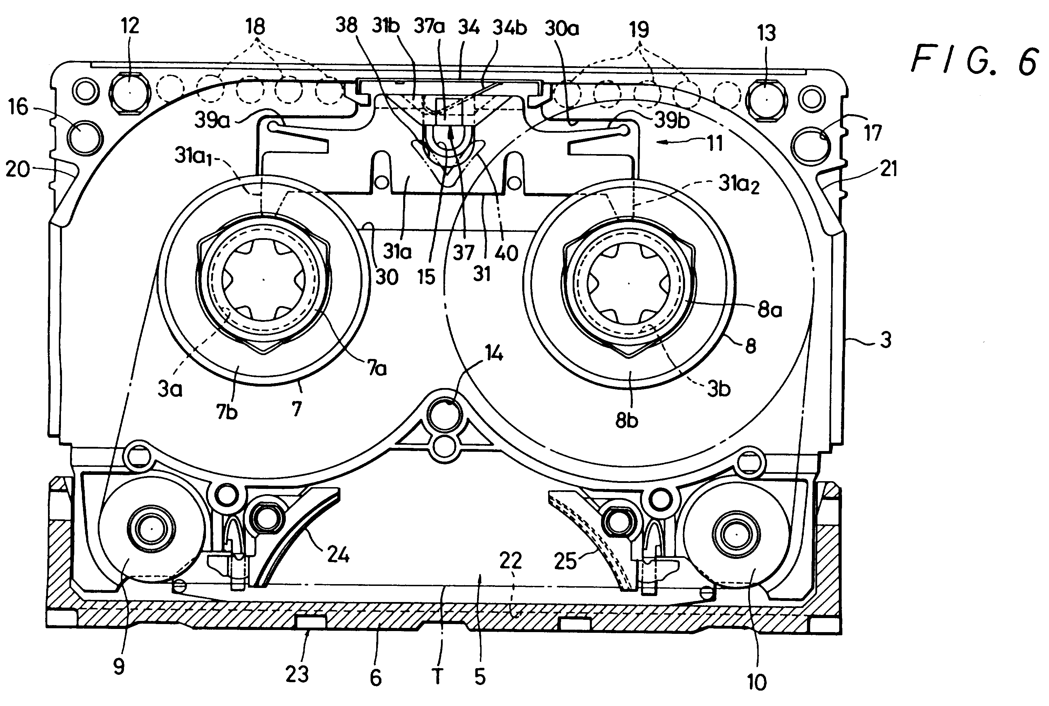

In this embodiment, in order to ensure that the tape T is brought into slidable contact with the head drum 42 in a helical scan fashion, as shown in Figure 6, a pair of tape guide members 24 and 25 whose guide portions are inclined in opposite directions are disposed in the insertion portion of the opening 5 for the head drum 42, at positions inside the guide rollers 9 and 10, such that the tape guide members 24 and 25 can be oscillated and moved in the lateral direction in an opposing fashion. When the head drum 42 is inserted into the opening 5, the tape guide members 24 and 25 come into contact with the peripheral surface of the head drum 42, and guide the tape T which is sandwiched between them and the peripheral surface of the head drum 42.

As shown in Figure 5, the head drum 42 has at respective side portions, wing guides 43 and 44 which are inserted between the pinch rollers 9 and 10 and the tape guide members 24 and 25 at respective sides of the opening 5. Rollers 43a and 44a are mounted on the front end portions of the two wing guides 43 and 44, and are brought into sliding contact with the tape T, urging the tape T against the tape guide members 24 and 25.

The wing guides 43 and 44 are inserted into the opening 5 of the cassette casing 1 such that they are located between supporting members 26 and 27 provided near the inside of the opening 5, and tape projection preventing guide protrusions 28 and 29 positioned between the supporting members 26 and 27 and the pinch rollers 9 and 10.

The arrangement of the braking mechanism 11 will now be explained with reference to Figures 1 to 3.

As illustrated, a recess portion 30 of substantially rectangular configuration is formed on the bottom surface of the lower part 3 at its rear central portion. A braking member 31 is accommodated within the recess portion 30 such that the braking member 31 can be freely moved in the front and back directions, that is, in the directions in which the braking member 31 approaches or moves away from the reel hubs 7 and 8.

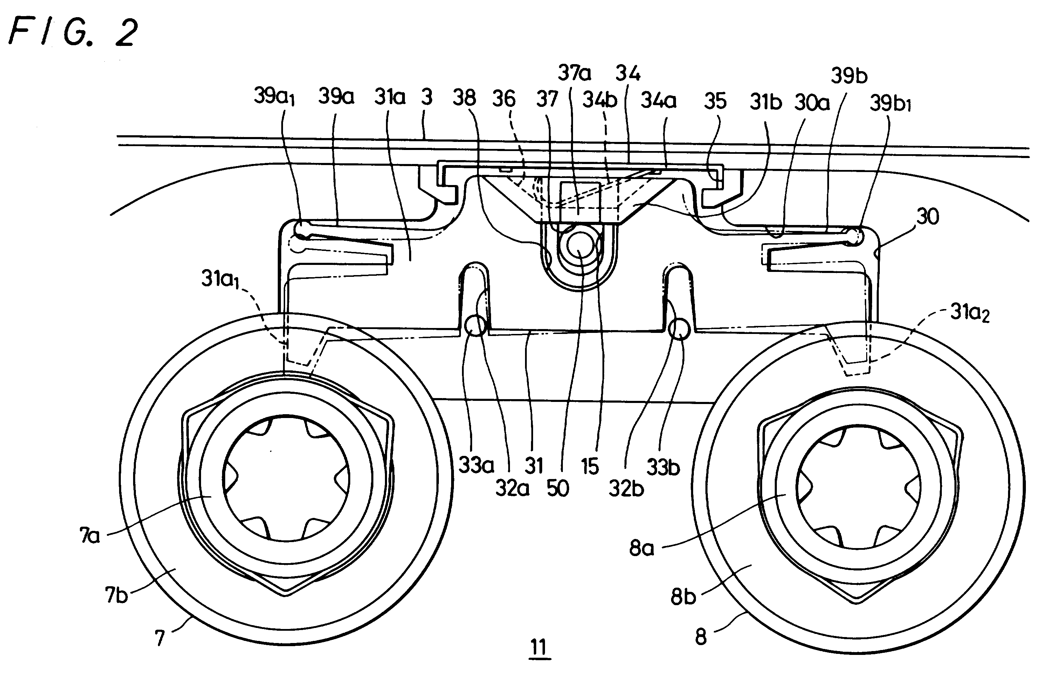

As shown in the figures, the braking member 31 comprises a flat plate portion 31a which is flush with the bottom surface of the recess portion 30, and a vertically-protruded wall portion 31b erected from the rear portion of the flat plate portion 31a. A pair of protruded nail members 31a1 and 31a2 protrude from the front portion of the flat plate portion 31a so as to correspond with the two reel hubs 7 and 8 as shown in Figure 2. The end portions of the nail members 31a1 and 31a2 are urged against the reel hubs 7 and 8, whereby the two reel hubs 7 and 8 are locked, as will be described later.

The reel hubs 7 and 8 comprise inner hubs 7a and 8a with which hub drive shafts are engaged, and outer hubs 7a and 8b which can be moved in the axial directions relative to the inner hubs 7a and 8a in the circumferential direction thereof. The nail members 31a1 and 31a2 of the braking member 31 are urged against the peripheral surfaces of the inner hubs 7a and 8a protruded from the lower surface of the outer hubs 7b and 8b, respectively.

A pair of left and right guide slits 32a and 32b of recess configuration are formed in the central portion of the flat plate portion 31a so as to extend rearwardly from the front edge of the flat plate portion 31a. A pair of guide pins 33a and 33b project from the bottom surface of the recess portion 30 in correspondence with the pair of guide slits 32a ad 32b. The guide slits 32a and 32b are guided by the guide pins 33a and 33b, whereby the moving direction of the braking member 31 is restricted.

A plate spring 34 is provided at the rear side of the braking member 31 to spring-bias the braking member 31. The plate spring 34 comprises a main plate portion 34a and an arm portion 34b erected from the central portion of the main plate portion 34a. The main plate portion 34a is engaged with a spring accommodating portion 35 provided at the rear side wall inner surface side of the lower part 3, and the arm portion 34b is engaged at its end portion with a concave portion 36 formed on the rear surface side of the vertical wall portion 31b as shown in Figure 2. Thus, the braking member 31 is always spring-biased in the forward direction, that is in the direction in which the nail members 31a1 and 31a2 are urged against the peripheral surfaces of the inner hubs 7a and 7b.

The vertical wall portion 31b of the braking member 31 has on its central front surface side a pressing operation portion 37 which allows the braking member 31 to perform the hub lock releasing operation. The pressing operation portion 37 is formed with a mountain-configuration whose central portion is high in cross-sectional side view, that is, the pressing operation portion 37 has inclined cam surfaces 37a and 37b symmetrically inclined rearwardly towards the upper to lower sides from the central portion. When the pressing operation portion 37 is pressed by a lock releasing pin inserted through an insertion aperture formed through the two upper and lower parts 2 and 3, the braking member 31 is moved in the rearward direction, whereby the reel hubs 7 and 8 are released from their locked conditions.

In this embodiment, one of the positioning reference apertures of the cassette casing 1, that is the reference aperture 15, is at the rear and central portion of the cassette casing 1 in its front to back direction, so that, when the tape cassette is loaded onto a cassette tape recorder, a cassette tape recorder positioning pin 50 inserted into the reference aperture 15 is used as the lock releasing pin. Thus the hub lock releasing operation of the braking member 31 is performed by the positioning pin 50.

An opening 38 elongated in the front to back direction is formed through the central portion of the flat plate portion 31a of the braking member 31 in correspondence with the reference aperture (insertion aperture) 15, and the opening 38 is employed as a portion in which the positioning pin (lock releasing pin) 50 inserted from the lower half 3 side escapes.

A pair of left and right protruded portions 39a and 39b protrude symmetrically from respective sides of the flat plate portion 31a of the braking member 31 at its rear portion in the lateral direction. The protruded portions 39a and 39b have a predetermined resiliency so that, if the braking member 31 is abnormally operated in an inclined fashion in the hub lock releasing operation, one of top circular-shaped portions 39a1 and 39b1 of the two protruded portions 39a and 39b comes into contact with a rear side edge surface 30a of the recess portion 30, so the braking member 31 is returned to the normal hub lock releasing condition, as will be described later.

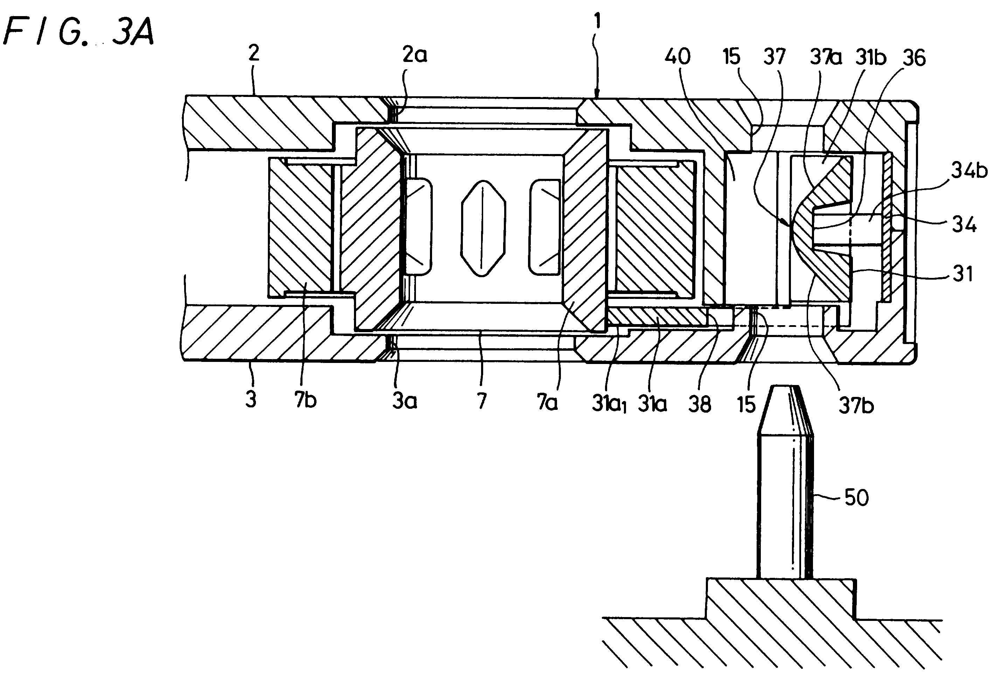

In this braking mechanism 11, as shown in Figure 3A, a supporting column member 40 projects from the inner surface side of the upper part 2 in the lower direction, and the lower end face of the support column member 40 faces the central portion of the flat plate portion 31a of the braking member 31. The braking member 31 is always restricted by this support column member 40 so that it can be prevented from being disengaged from the recess portion 30.

As will be clear from the above description, in the normal condition, or when the tape cassette is not in use, the nail members 31a1 and 31a2 of the braking member 31 are urged against the peripheral surfaces of the inner hubs 7a and 8a of the two reel hubs 7 and 8 by the spring-biasing force of the plate spring 34, whereby the two reels hubs 7 and 8 are located and prevented from being rotated by a certain amount of shock (see Figures 3A and 6).

When the tape cassette is loaded onto a cassette tape recorder, the cassette tape recorder positioning pin 50 is inserted into the reference aperture 15 (in actual practice, the cassette casing 1 is lowered and the reference aperture 15 is engaged with the positioning pin 50), so that the positioning of the cassette casing 1 is performed and the hub lock releasing operation by the braking member 31 is simultaneously performed.

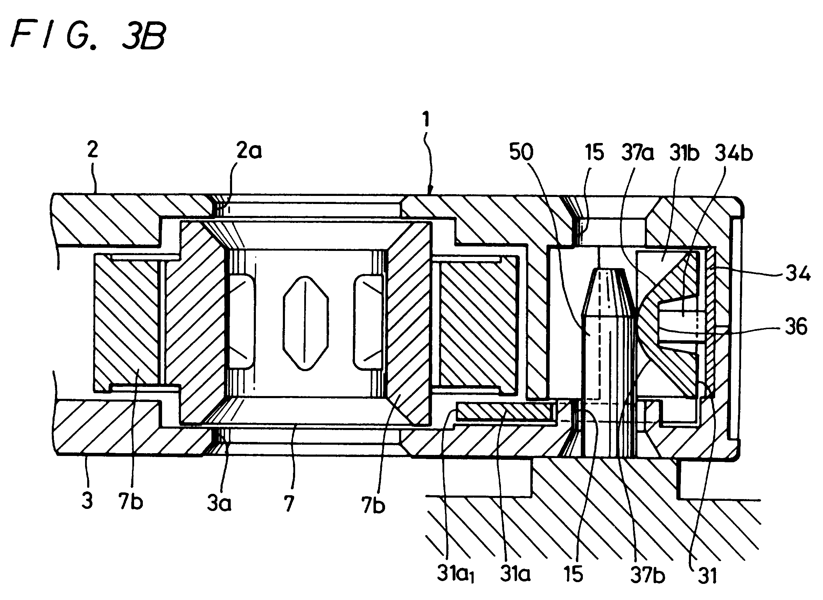

The hub lock releasing operation by the braking member 31 can be performed from either the upper or the lower side. That is, when the tape cassette is loaded onto the cassette tape recorder with the upper part 2 (so-called side A) up as shown in Figure 3, the positioning pin 50 inserted onto the reference aperture 15 of the lower part 3 presses the inclined cam surface 37b of one side (lower side in Figure 3) of the pressing operation portion 37 so that the braking member 31 is moved rearwards against the spring-biasing force of the plate spring 34, that is, the braking member 31 is moved in the direction in which the nail members 31a1 and 31a1 separate from the inner hubs 7a and 8a of the reel hubs 7 and 8 (see Figures 3B and 2). Conversely, when the tape cassette is loaded onto the cassette tape recorder with the cassette casing 1 turned over and the lower part 3 up, the positioning pin 50 inserted into the reference aperture 15 of the upper part 2 presses the inclined surface 37a of the other side of the pressing operation portion 37, whereby the braking member 31 is moved in the rearwards as described above, so the reel hubs 7 and 8 released from their locked conditions.

In the hub lock releasing operation of the braking member 31, the braking member 31 is operated by pressing one point of the central portion of the braking member 31. There is then a substantial risk that the braking member 31 may be operated in an unbalanced fashion and moved in the inclined condition as shown by a two-dot chain line in Figure 2. Thus the braking member 31 is placed in a so-called deviated condition where only one nail member is brought into contact with the reel hub and does not separate from the reel hub. In that case, the top circular-shaped portion of either one of the left and right protruded portions (the top circular-shaped portion 39b1 of the right protruded portion 39b in the example of Figure 2) comes into contact with the rear side edge surface 30a of the recess 30, whereby the braking member 31 is returned to the normal condition that the two nail members 31a1 and 31a2 correspond with the reel hubs 7 and 8 in a well-balanced condition by virtue of the cushion-action of the protruded portion. Thus, the two nail members 31a1 and 31a2 separate from the reel hubs 7 and 8 together, so the braking member 31 is protected from the above-mentioned defect and the two reel hubs 7 and 8 can be released from their locked conditions.

When the reel hubs 7 and 8 have been positively released from being locked by the braking member 31, the reel hubs 7 and 8 are rotated by driving the hub drive shafts (not shown) of the cassette tape recorder, whereby the tape T is transported.

Since the positioning reference aperture 15 of the cassette casing 1 is utilized as the pin insertion aperture into which the pin 50 for operating the braking member 31 is inserted, insertion apertures need not be formed respectively through the upper and lower parts 2 and 3 of the cassette casing 1, which saves space on the cassette casing 1 from a design standpoint. This is very important for the extremely small magnetic tape cassette of this embodiment in which the space on the cassette casing 1 is restricted. Also, on the cassette tape recorder side, the lock releasing pin for operating the braking member 31 is not needed, and the positioning of the cassette casing 1 and the hub lock releasing operation of the braking member 50 are simultaneously performed by the positioning pin 50. Therefore, the assembly parts on the cassette tape recorder side can be reduce, and the mechanism of the cassette tape recorder can be simplified.

While the invention has been described as applied to an extremely small magnetic tape cassette for recording a PCM signal, the invention is not limited thereto and can be applied to a wide variety of tape cassettes such as a standard audio compact tape cassette and other tape cassette of double-sided type.

## Claims

1. A magnetic tape cassette comprising:
a braking means (31) provided within a cassette casing (1) in such a manner that portions of the braking means (31) can be brought into contact with or be separated from peripheral surfaces of a pair of reel hubs (7, 8) around which a magnetic tape (T) is wound;
wherein the braking means (31) is always spring-biased in the locking direction in which it is urged against the reel hubs (7, 8); and has symmetrically-inclined cam surfaces (37a, 37b) on its upper and lower sides which are pushable by a pin (50) inserted from either of insertion apertures (15) formed through upper and lower parts (2, 3) of the cassette casing (1) to effect a hub lock releasing operation of the braking means (31) is performed;
characterised in that the braking means comprises a single integral braking member (31) formed with an upstanding portion (31b) having the cam surfaces (37a, 37b) thereon to cooperate with the pin (50); a flat plate portion (31a) received in a recess (30) in a wall of the cassette casing (1); nail members (31a1, 31a2) protruding from the front of the flat plate portion (31a) to engage the reel hubs (7, 8); and a pair of left and right resilient protruded portions (39a, 39b) protruding from the rear of the flat plate portion (31a) so that, when the braking means (31) is moved abnormally in the hub lock releasing operation, one of the pair of resilient protruded portions (39a, 39b) is brought into contact with a portion of the cassette casing (1) to cause the braking member (31) to be returned to a normal hub lock releasing position.

2. A cassette according to claim 1, wherein the insertion aperture (15) also serves as a positioning reference aperture of the cassette casing (1).

## Patentansprüche

1. Magnetbandkassette, die folgendes aufweist:
ein derart in einem Kassettengehäuse (1) bereitgestelltes Bremsmittel (31), daß Teile des Bremsmittels (31) in Kontakt gebracht oder getrennt werden können mit oder von Umfangsoberflächen eines Paares von Spulennaben (3, 8), um die ein Magnetband (T) gewickelt ist;
worin das Bremsmittel (31) in der Sperrichtung, in der es gegen die Spulennaben (7, 8) angedrückt wird, ständig unter Federvorspannung steht; und es weist symmetrisch geneigte Nockenoberflächen (37a, 37b) auf seinen oberen und unteren Seiten auf, die durch einen Stift (50) andrückbar sind, der von einer von Einstecköffnungen (15) eingeführt ist, die durch obere und untere Teile (2, 3) des Kassettengehäuses (1) ausgebildet sind, um eine Nabenentriegelungsfunktion des Bremsmittels (31) zu bewirken und auszuführen;
**dadurch gekennzeichnet,** daß das Bremsmittel ein einziges einstückiges Bremsglied (31) aufweist, das mit einem aufrechten Teil (31b) ausgebildet ist, das die Nockenoberflächen (37a, 37b) aufweist, um mit dem Stift (50) zusammenzuwirken; ein ebenes plattenförmiges Teil (31a), das in einer Aussparung (30) in einer Wand des Kassettengehäuses (1) aufgenommen ist; fingerförmige Glieder (31a1, 31a2), die von der Vorderseite des ebenen plattenförmigen Teiles (31a) hervorragen, um mit den Spulennaben (7, 8) zusammenzuwirken; und ein Paar von linken und rechten federnden hervorragenden Teilen (39a, 39b), die von der Rückseite des ebenen plattenförmigen Teiles (31a) hervorstehen, so daß, wenn das Bremsmittel (31) abnormal in die Nabenentriegelungsfunktion bewegt wird, eines der Paare von federnden hervorragenden Teilen (39a, 39b) in Kontakt mit einem Teil des Kassettengehäuses (1) gebracht wird, um zu bewirken, daß das Bremsglied (31) in eine normale Nabenentriegelungsposition zurückgeführt wird.

2. Kassette nach Anspruch 1, worin die Einstecköffnung (15) ebenso als eine Positionierungsbezugsöffnung des Kassettengehäuses (1) dient.

## Revendications

1. Cassette à bande magnétique, comprenant :
des moyens de freinage (31) prévus dans un boîtier de cassette (1) d'une manière telle que des parties des moyens de freinage (31) peuvent être amenées en contact avec, ou bien être séparées depuis des surfaces périphériques d'une paire de moyeux de bobine (7, 8) autour desquels une bande magnétique (T) est enroulée ;
dans laquelle les moyens de freinage (31) sont toujours élastiquement repoussés dans la direction de blocage dans laquelle ils sont repoussés contre les moyeux de bobine (7, 8), et présentent des surfaces de came symétriquement inclinées (37a, 37b) sur leur côté supérieur et leur côté inférieur, qui sont susceptibles d'être poussées par une tige (50) introduite depuis l'une ou l'autre des ouvertures d'introduction (15) formées à travers des parties supérieure et inférieure (2, 3) du boîtier de cassette (1) pour effectuer une opération de libération des moyens de freinage (31);
caractérisée en ce que les moyens de freinage comprennent un élément de freinage intégré unique (31) formé avec une partie relevée (31b) ayant les surfaces de came (37a, 37b) sur elle-même pour coopérer avec la tige (50) ; une partie de plaque plane (31a) reçue dans un évidement (30) dans une paroi du boîtier de cassette (1) ; des éléments en pointe (31a1, 31a2) qui se projettent depuis la partie frontale de la partie de plaque plane (31a) pour engager les moyeux de bobine (7, 8) ; et une paire de parties élastiques en projection de gauche et de droite (39a, 39b) qui se projettent depuis l'arrière de la partie de plaque plane (31a) de sorte que, lorsque les moyens de freinage (31) sont déplacés de façon anormale dans l'opération de libération, l'une des parties élastiques en projection de ladite paire (39a, 39b) est amenée en contact avec une partie du boîtier de cassette (1) pour amener l'élément de freinage (31) à revenir à une position de libération normale.

2. Cassette selon la revendication 1, dans laquelle l'ouverture d'introduction (15) sert également d'ouverture de référence de positionnement du boîtier de cassette (1).
